# EUROPÄISCHE PATENTSCHRIFT

(11) **EP 2 226 547 B1**
(45) Veröffentlichungstag und Bekanntmachung des Hinweises auf die Patenterteilung: **09.01.2013**
(21) Anmeldenummer: 09003097.4
(22) Anmeldetag: 04.03.2009
(51) Int. Cl.: F16N 7/32, F16N 29/00, B05B 12/08

(54) **Schmiermittelsprühvorrichtung**
Lubricant spraying device
Dispositif de pulvérisation de lubrifiant

(43) Veröffentlichungstag der Anmeldung: 08.09.2010
(73) Patentinhaber: Delimon GmbH, 40227 Düsseldorf (DE)
(72) Erfinder: Gaunitz, Wolfgang, 41469 Neuss (DE)
(74) Vertreter: Stenger, Watzke & Ring

(56) Entgegenhaltungen:
- EP-A1- 0 419 835
- JP-A- 2006 258 263
- US-A- 1 975 311
- US-A- 4 707 309
- US-A- 4 735 286
- US-A- 5 119 989

## Beschreibung

Die vorliegende Erfindung betrifft eine Schmiermittelsprühvorrichtung sowie ein Verfahren zu deren Betrieb.

Sprühvorrichtungen der gattungsgemäßen Art sind grundsätzlich bekannt, beispielsweise aus der DE 1 750 645 U oder EP 0 419 835 A1. Sie dienen zum Aufbringen einer vorgegebenen Menge eines Schmiermittels, beispielsweise Fett oder Öl, an eine oder mehrere Schmierstellen. Anwendungsfälle solcher Schmiermittelsprühvorrichtungen sind beispielsweise das Schmieren von Zahnflanken von Zahnrädern, Spurkränzen von Rädern von Schienenfahrzeugen sowie weiterer, gegenüber der Schmiermittelsprühvorrichtung bewegter Maschinenteile. Mittels der Schmiermittelsprühvorrichtung wird das Schmiermittel unter Zerstäubung durch Pressluft auf die zu schmierende Stelle aufgebracht.

Bei den gattungsgemäßen Vorrichtungen erweist es sich als Problem, dass die Schmierstoffsprühvorrichtung hinsichtlich ihrer Funktion nur unzureichend überwacht wird. Bei der Vorrichtung der DE 1 750 645 U wird lediglich überwacht, ob Schmierstoff gefördert wird. Eine Verstopfung des Schmiermittelaustritts blockiert die Vorrichtung. Ein Druckabfall im Bereich des Schmiermittels wird mittels eines Kontrollstifts angezeigt. Die Druckluftbeaufschlagung dagegen wird nicht überwacht. Fällt die Druckluftzufuhr aus, so kann bei bestimmungsgemäß anliegendem Druck am Schmiermittel das Schmiermittel zwar durch eine Ausblasdüse ausgedrückt werden, jedoch wird es nicht in ein Aerosol gebracht, welches zu der zu schmierenden Stelle geblasen wird. Dies führt dazu, dass die zu schmierende Stelle nicht hinreichend mit Schmiermittel versorgt werden kann.

Der Erfindung liegt somit die **Aufgabe** zugrunde, eine gattungsgemäße Vorrichtung dahingehend weiterzubilden, dass eine Überwachung der Funktion der Schmiermittelsprühvorrichtung verbessert werden kann.

Als **Lösung** wird mit der Erfindung eine Schmiermittelsprühvorrichtung vorgeschlagen, die aufweist: einen Druckluftkanal mit einem Druckluftanschluss, einen Schmiermittelkanal mit einem Schmiermittelanschluss, einen Verbindungskanal, der den Druckluftkanal fluidtechnisch mit dem Schmiermittelkanal verbindet, einen in eine Ausblasdüse mündenden Auslasskanal, der fluidtechnisch mit dem Verbindungskanal verbunden ist, ein mit dem Druckluftkanal verbundenes Druckerfassungsmittel, und ein mit dem Schmiermittelkanal verbundenes Druckerfassungsmittel.

Die Schmiermittelsprühvorrichtung kann beispielsweise in einem Gehäuse angeordnet sein oder einen Vorrichtungsblock aufweisen, in dem die erforderlichen Komponenten zumindest teilweise angeordnet sind. Der Druckluftkanal kann beispielsweise durch eine Röhre, einen Schlauch oder dergleichen gebildet sein. Darüber hinaus kann der Druckluftkanal auch durch eine Bohrung in dem Vorrichtungsblock gebildet sein. An einem Ende des Druckluftkanals ist der Druckluftanschluss ausgebildet, an dem der Schmiermittelsprühvorrichtung Druckluft zugeführt werden kann. Der Druckluftanschluss kann beispielsweise derart ausgebildet sein, dass Druckluft über eine Leitung, einen Schlauch oder der gleichen von einer Druckluftquelle zugeführt werden kann. Hierfür kann der Druckluftanschluss beispielsweise einen Flansch aufweisen, der es erlaubt, eine Druckluftleitung beziehungsweise eine Druckluftquelle an dem Druckluftanschluss insbesondere lösbar anzuschließen. Zum Zwecke des Anschließens kann der Druckluftanschluss ein Gewinde, einen Bajonettverschluss oder dergleichen aufweisen.

Der Schmiermittelkanal kann ebenfalls durch eine Röhre, einen Schlauch oder dergleichen gebildet sein. Weist die Schmiermittelsprühvorrichtung einen Vorrichtungsblock auf, kann der Schmiermittelkanal auch durch eine Bohrung oder dergleichen in dem Vorrichtungsblock gebildet sein. An einem Ende weist der Schmiermittelkanal einen Schmiermittelanschluss auf, der es erlaubt, eine Schmiermittelzuführleitung oder eine Schmiermittelquelle anzuschließen. Hierfür kann der Schmiermittelanschluss Verbindungsmittel aufweisen, die insbesondere eine lösbare Verbindung der Schmiermittelsprühvorrichtung mit der Schmiermittelquelle ermöglichen, indem der Schmiermittelanschluss beispielsweise einen Anschlussflansch, ein Anschlussgewinde, einen Bajonettverschluss oder dergleichen aufweist.

Der Verbindungskanal verbindet den Druckluftkanal fluidtechnisch mit dem Schmiermittelkanal. Insbesondere dient er dazu, Druckluft vom Druckluftkanal zum Schmiermittelkanal strömen zu lassen, wobei ein Bereich gebildet wird, in dem die Druckluft mit dem Schmiermittel vermischt wird. Der Verbindungskanal kann ebenfalls durch einen Schlauch, eine Röhre oder dergleichen gebildet sein, oder aber auch durch eine Bohrung bei Verwendung eines Vorrichtungsblocks, die den Druckluftkanal mit dem Schmiermittelkanal verbindet. Gegebenenfalls können Abzweigstücke vorgesehen sein, die es erlauben, den Verbindungskanal mit dem Druckluftkanal und dem Schmiermittelkanal zu verbinden.

Darüber hinaus ist ein in eine Ausblasdüse mündender Auslasskanal vorgesehen, der fluidtechnisch mit dem Verbindungskanal verbunden ist. Beispielsweise kann vorgesehen sein, dass der Verbindungskanal in den Auslasskanal mündet. Natürlich kann auch vorgesehen sein, dass der Auslasskanal und der Verbindungskanal gegenüberliegend mit dem Schmiermittelkanal verbunden sind, so dass ein durch den Auslasskanal und den Schmiermittelkanal gebildeter Kanal den Schmiermittelkanal kreuzt. Diese Kreuzung bildet eine Verbindungsstelle, wobei über den Verbindungskanal zuströmende Druckluft sich an der Verbindungsstelle mit dem Schmiermittel mischt und sodann in den Auslasskanal gefördert wird. Von hieraus gelangt das Gemisch aus Druckluft und Schmiermittel zur Ausblasdüse, durch die es in ein vorzugsweise fein verteiltes Aerosol gebracht wird.

Mit dem Druckluftkanal verbunden ist ein Druckerfassungsmittel, welches insbesondere zur Erfassung des Vorhandenseins eines Luftdruckes im Druckluftkanal dient. Das Druckerfassungsmittel kann beispielsweise an einem dem Druckluftanschluss gegenüberliegenden Ende des Druckluftkanals angeordnet sein. Insbesondere kann es im Bereich der Verbindung mit dem Verbindungskanal angeordnet sein. Das Druckerfassungsmittel kann beispielsweise durch einen Manometer, einen elektronischen Drucksensor, aber auch durch mechanische Druckerfassungsmittel gebildet sein, beispielsweise elastische Elemente, die sich unter Druckeinwirkung verformen und deren Verformung erfasst werden kann. Das Druckerfassungsmittel ist vorzugsweise derart ausgebildet, dass zumindest das Vorhandensein eines Luftdruckes angezeigt beziehungsweise gemeldet werden kann. Hierfür kann das Druckerfassungsmittel Anzeige- beziehungsweise Meldeeinrichtungen aufweisen. So kann das Druckerfassungsmittel beispielsweise mit einer zeigerbasierten mechanischen Anzeigevorrichtung verbunden sein.

Darüber hinaus ist ein Druckerfassungsmittel mit dem Schmiermittelkanal verbunden. Vorzugsweise handelt es sich bei diesem Druckerfassungsmittel um ein vom Druckerfassungsmittel für die Druckluft separates Druckerfassungsmittel. Dies ermöglicht es nämlich, sowohl den Schmiermitteldruck als auch den Luftdruck separat beziehungsweise unabhängig voneinander zu erfassen, um die bestimmungsgemäße Funktion der Schmiermittelsprühvorrichtung überwachen zu können. Die separate Ausbildung des Druckerfassungsmittel des Schmiermittelkanals gegenüber dem Druckerfassungsmittel für den Druckluftkanal erlaubt es darüber hinaus, die Druckerfassungsmittel an die entsprechenden Eigenschaften des zu überwachenden Mediums, einerseits Druckluft, andererseits Schmiermittel, optimiert anzupassen, um so eine hohe Zuverlässigkeit und Erfassungsgenauigkeit erreichen zu können. Auch das Druckerfassungsmittel für die Erfassung des Drucks des Schmiermittels kann vorzugsweise an einem dem Schmiermittelanschluss des Schmiermittelkanals gegenüberliegenden Ende angeordnet sein. Im Übrigen kann das Druckerfassungsmittel auch grundsätzlich derart aufgebaut sein, wie das Druckerfassungsmittel für die Druckluft.

Eine Ausgestaltung sieht vor, dass die Druckerfassungsmittel für den Druckluftkanal und den Schmiermittelkanal im Wesentlichen identisch ausgebildet sind. Dies erlaubt es, eine einfache Konstruktion und einen einfachen Aufbau zu erreichen, insbesondere auch eine einfache Bedienung. Insgesamt kann durch die Erfindung erreicht werden, dass der Druck beziehungsweise das Vorhandensein eines Drucks der Druckluft sowie der Druck beziehungsweise das Vorhandensein eines Drucks des Schmiermittels unabhängig voneinander erfasst werden können, so dass nicht nur die bestimmungsgemäße Funktion der Schmiermittelsprühvorrichtung im Wesentlichen vollständig überwacht werden kann, sondern darüber hinaus auch noch bei Störungen Rückschlüsse auf die Art der Störung möglich sind. Besonders vorteilhaft erweist es sich hierfür, wenn die Druckerfassungsmittel nicht nur das Vorhandensein eines Drucks erfassen, sondern auch den Druck messen können. Hierfür kann vorgesehen sein, dass jeweils der aktuelle Druck gemessen wird. Natürlich kann auch vorgesehen sein, dass das Erreichen beziehungsweise Unterschreiten eines vorgebbaren Drucks gemessen wird. Diese Ausgestaltung eignet sich beispielsweise für Anwendungen, bei denen das Vorhandensein eines minimalen Drucks erforderlich ist. Das Erfassen des Drucks kann aber auch das Vorhandensein eines Drucks in einem vorgebbaren Druckbereich umfassen.

Das Druckerfassungsmittel ist durch eine im Druckluftkanal und/oder im Schmiermittelkanal angeordnete Kolbenanordnung gebildet ist. Mittels der Kolbenanordnung kann eine einfache Ausgestaltung eines Druckerfassungsmittels erreicht werden. Die Kolbenanordnung ermöglicht eine einfache insbesondere mechanische Ausgestaltung eines Druckerfassungsmittels, die eine zuverlässige Erfassung des Drucks ermöglicht. Die Kolbenanordnung kann durch einen oder mehrere Kolben gebildet sein, die im Druckluftkanal und/oder im Schmiermittelkanal angeordnet sind. Eine Erfassung der Stellung der Kolben erlaubt es, den Druck zu erfassen, insbesondere einen aktuell anliegenden Druck zu erfassen, beziehungsweise zu erfassen, ob Druck vorhanden ist. Die Kolbenanordnung erlaubt es darüber hinaus, das Druckerfassungsmittel unabhängig vom Vorhandensein von einer Energieversorgung zu betreiben.

Darüber hinaus weist die Kolbenanordnung erfindungsgemäß einen entlang einer Kanalachse bewegbaren, vorgespannten Kolben auf. Vorzugsweise ist der Kolben gegen eine Druckwirkung der Druckluft beziehungsweise des Schmiermittels vorgespannt. Zur Erfassung eines Drucks beziehungsweise des Vorhandenseins eines Drucks bewegt sich der Kolben aufgrund einer Druckeinwirkung entlang der Kanalachse des Druckluftkanals beziehungsweise des Schmiermittelkanals. Der Kolben kann zum Beispiel als Zylinder ausgebildet sein, der an Abmessungen des Kanals angepasst ist, so dass er vorzugsweise gleitend in dem Kanal bewegbar ist. Die Vorspannung des Kolbens kann durch eine Feder, beispielsweise eine Spiralfeder, eine Tellerfeder oder dergleichen aber auch durch Gravitation erreicht werden. Es kann vorgesehen sein, dass die Feder an einem druckluftanschlussseitig beziehungsweise schmiermittelanschlussseitig gegenüberliegenden Ende des Druckluftkanals beziehungsweise des Schmiermittelkanals angeordnet ist, wobei sich der Kolben an dieser Feder abstützt. Daneben kann die Vorspannung auch durch ein geschlossenes Gasvolumen gebildet sein, auf welches der Kolben einwirkt. Je nach vorhandenem Druck wird der Kolben entgegen der Vorspannung im Druckluftkanal beziehungsweise im Schmiermittelkanal verschoben. Der Kolben kann als Zylinder ausgebildet sein, der vorzugsweise einen kreiszylindrischen Querschnitt aufweist.

Das Druckerfassungsmittel weist erfindungsgemäß einen Lagesensor für den Kolben auf. Mit dem Lagesensor kann eine aktuelle Position des Kolbens erfasst werden. Somit kann der Kolben in einem Bereich angeordnet sein, der für eine Erfassung durch Sicht oder dergleichen nicht zugänglich ist. Darüber hinaus erlaubt es der Lagesensor, eine Erfassung der Position des Kolbens zu automatisieren. Der Lagesensor kann beispielsweise durch elektronische Sensoren, beispielsweise kapazitive Sensoren, Feldsensoren oder dergleichen gebildet sein.

Vorteilhaft weist der Lagesensor jedoch eine mit dem Kolben verbundene Kolbenstange auf. Umfasst die Schmiermittelsprühvorrichtung einen Vorrichtungsblock oder ein Gehäuse, ragt die Kolbenstange vorzugsweise aus diesem heraus. Somit kann auch in einer geschlossenen Schmiermittelsprühvorrichtung die jeweilige Position des Kolbens und damit der Druck beziehungsweise das Vorhandensein des Drucks im Druckluftkanal beziehungsweise im Schmiermittelkanal erfasst werden. Die Kolbenstange kann einteilig oder auch mehrteilig ausgebildet sein. Beispielsweise kann die Kolbenstange einstückig mit dem Kolben ausgebildet sein. Darüber hinaus kann vorgesehen sein, dass die Kolbenstange Umlenkmittel, beispielsweise ein Gelenk oder dergleichen aufweist, die es ermöglichen, eine Bewegung des Kolbens in eine beliebige andere Bewegung umzuwandeln. Dies ist beispielsweise dann vorteilhaft, wenn aus räumlichen Gründen eine Umlenkung erforderlich sein sollte. Zur Erfassung des Drucks kann die jeweilige Position des dem Kolben gegenüberliegenden Endes der Kolbenstange erfasst werden. Die Position ist ein Maß für den Druck beziehungsweise das Vorhandensein von Druck im Druckluftkanal beziehungsweise im Schmiermittelkanal.

Wenigstens der im Schmiermittelkanal angeordnete Kolben und/oder der Schmiermittelkanal weist erfindungsgemäß einen Bypass auf. Hierdurch kann ein Rückführen des Kolbens aufgrund seiner Vorspannung erleichtert werden, indem zu verdrängendes Schmiermittel über den Bypass an dem Kolben vorbeigeführt wird. Dies ist insbesondere dann vorteilhaft, wenn ein Schmiermittel verwendet wird, welches im Wesentlichen inkompressibel ist. Ansonsten könnte nämlich der Kolben nicht entgegen im Schmiermittelkanal vorhandenem Schmiermittel bewegt werden. Der Bypass kann beispielsweise durch einen Kanal, insbesondere eine Leitung beziehungsweise eine Bohrung gebildet sein. Die Bohrung kann beispielsweise im Kolben selbst ausgebildet sein, indem der Kolben mit einer axialen Bohrung versehen ist.

Eine weitere Ausgestaltung sieht vor, dass der Druckluftkanal und der Schmiermittelkanal zumindest im Bereich der Druckerfassungsmittel im Wesentlichen achsparallel ausgerichtet sind. Dies ermöglicht es, die Druckerfassungsmittel gemeinsam anzuordnen, so dass eine einfache Montage der Vorrichtung erreicht werden kann. Darüber hinaus erlaubt diese Ausgestaltung auch auf einfache Weise im Wesentlichen gleiche Bedingungen für die Druckerfassungsmittel zu schaffen, so dass eine zuverlässige Druckerfassung verbessert werden kann.

Eine Ausgestaltung sieht vor, dass die Vorrichtung eine Steuereinheit aufweist. Mit der Steuereinheit kann sowohl das Zuführen von Druckluft als auch das Zuführen von Schmiermittel gesteuert werden. Darüber hinaus kann erreicht werden, dass mittels der Steuereinheit der Druck der Druckluft und/oder der Druck des Schmiermittels eingestellt werden kann.

Gemäß einer Weiterbildung weist die Schmiermittelsprühvorrichtung ein Heizelement auf. Das Heizelement erlaubt es, die Vorrichtung bedarfsgerecht zu beheizen, beispielsweise um die Vorrichtung an Umgebungsbedingungen, insbesondere eine Umgebungstemperatur anzupassen. Hierdurch kann eine zuverlässige Funktion der Schmiermittelsprühvorrichtung auch bei ungünstigen niedrigen Umgebungstemperaturen erreicht werden.

Vorteilhaft erweist es sich, wenn das Heizelement im Bereich des Schmiermittelkanals angeordnet ist. Bekanntermaßen ist die Viskosität des Schmiermittels eine Funktion der Umgebungstemperatur. So kann bei niedriger Umgebungstemperatur die Sprühwirkung der Düse beeinträchtigt sein, so dass eine zuverlässige Funktion der Schmiermittelsprühvorrichtung behindert ist. Durch eine Beheizung des Schmiermittelkanals kann das Schmiermittel auf eine gewünschte Temperatur gebracht werden, so dass die gewünschte Wirkung der Schmiermittelsprühvorrichtung auch bei ungünstigen Umgebungstemperaturen zuverlässig gewährleistet werden kann. Der Bereich des Schmiermittelkanals ist durch die nähere Umgebung zum Schmiermittelkanal gegeben. Vorzugsweise ist das Heizelement möglichst nahe am Schmiermittelkanal angeordnet. Ferner können Mittel für eine gute thermische Ankopplung des Heizelements an den Schmiermittelkanal vorgesehen sein, beispielswiese Wärmeleitpasten, Wärmeleitfolien oder dergleichen. Das Heizelement kann beispielsweise durch ein elektrisches Heizelement gebildet sein, welches entlang des Schmiermittelkanals angeordnet ist. Daneben kann auch ein den Schmiermittelkanal umgebender spiralförmiger Kanal vorgesehen sein, der von einem Heizmittel durchströmt wird, beispielsweise Wasser, Öl oder dergleichen. Daneben kann auch vorgesehen sein, dass die Druckluft als Heizelement zum Einsatz kommt, indem sie beispielsweise entsprechend temperiert zugeführt wird. Vorzugsweise sind in diesem Fall der Schmiermittelkanal und der Druckluftkanal möglichst dicht benachbart zueinander angeordnet, so dass die heiße Druckluft die Wärme gut auf das Schmiermittel übertragen kann. Der beheizte Bereich des Schmiermittelkanals ist derart gewählt, dass kontinuierlich ein zuverlässiger Betrieb der Schmiermittelsprühvorrichtung gewährleistet werden kann. Bei einem intermittierenden Betrieb ist dies eine Länge des Kanals, die die während eines Zyklusses abzugebende Schmiermittelmenge enthält.

Eine weitere Ausgestaltung sieht vor, dass das Heizelement hinsichtlich seiner Heizleistung steuerbar ist. Hierdurch kann eine Temperaturregelung erreicht werden, die es erlaubt, das Schmiermittel hinsichtlich seiner Temperatur in einem vorgegebenen Bereich zu halten. Dies erlaubt es, eine weitgehend gleichmäßige Aerosolproduktion beim bestimmungsgemäßen Betrieb der Schmiermittelsprühvorrichtung erreichen zu können. Als Regelparameter können beispielsweise Signale dienen, die von den Druckerfassungsmitteln erzeugt werden. So kann beispielsweise eine Reaktion des Kolbens der Kolbenanordnung auf Druckänderungen verwendet werden, um die Viskosität des Schmiermittels zu ermitteln. Liegt die Viskosität in einem vorgegebenen Bereich, ist eine Beheizung nicht erforderlich. Je nach Größe der Abweichung der Viskosität vom vorgegebenen Bereich kann die Heizleistung eingestellt werden. Bei einer großen Abweichung kann beispielsweise eine große Heizleistung vorgesehen sein, wobei bei einer geringen Abweichung lediglich eine geringe Heizleistung eingestellt wird. Die Regelung kann vorzugsweise durch die Steuereinheit bereitgestellt werden. Hierfür kann das Heizelement an die Steuereinheit angeschlossen sein. Eine entsprechende Regelungseinheit ist in der Steuereinheit angeordnet, so dass das Heizelement bedarfsgerecht gesteuert werden kann. Auf diese Weise lässt sich eine Regelung hinsichtlich der Schmiermitteltemperatur erreichen.

Um zu vermeiden, dass aus dem Druckluftkanal Druckluft in den Druckluftanschluss zurückgefördert wird oder dass Schmiermittel aus dem Schmiermittelkanal in den Schmiermittelanschluss zurückgefördert wird, kann vorgesehen sein, dass der Druckluftanschluss und/oder der Schmiermittelanschluss ein Sperrventil aufweist. Das Sperrventil kann in bekannter Weise durch einen federbelasteten Ventilkörper gebildet sein, der aufgrund seiner Vorspannung gegen einen Ventilsitz gedrückt wird. Zur Zuführung von Druckluft beziehungsweise Schmiermittel wird der Ventilkörper entgegen seiner Vorspannung vom Ventilsitz wegbewegt, so dass Druckluft beziehungsweise Schmiermittel das Sperrventil passieren kann. Diese Ausgestaltung erweist sich insbesondere auch dann als vorteilhaft, wenn das Schmiermittel beziehungsweise die Druckluft nicht hinreichend druckbeaufschlagt sind, so dass ein Überströmen in den jeweilig anderen Kanal über den Verbindungskanal erfolgen könnte. Durch das Sperrventil kann dies zuverlässig vermieden werden.

Mit der Erfindung wird ferner ein Verfahren zum Betrieb einer Schmiermittelsprühvorrichtung gemäß der Erfindung vorgeschlagen, wobei das Vorhandensein eines Luftdruckes in einem Druckluftkanal und das Vorhandensein eines Schmiermitteldruckes in einem Schmiermittelkanal jeweils mittels eines Druckerfassungsmittels erfasst und ein entsprechendes Signal erzeugt wird. Mit dem Signal kann angezeigt werden, ob in dem Druckluftkanal Luftdruck und in dem Schmiermittelkanal Schmiermitteldruck vorhanden ist. Dabei ermöglicht es das Signal, separat das Vorhandensein des Luftdruckes beziehungsweise des Schmiermitteldruckes anzuzeigen. Natürlich kann auch für das Vorhandensein des Luftdruckes beziehungsweise das Vorhandensein des Schmiermitteldruckes jeweils ein eigenes Signal vorgesehen sein. Das Verfahren erlaubt es, das Vorhandensein des Luftdruckes und das Vorhandensein des Schmiermitteldruckes unabhängig voneinander anzuzeigen. Das Signal kann ein optisches und/oder akustisches Signal sein. Natürlich kann auch ein elektronisches Signal vorgesehen ein, welches beispielsweise einer Zentrale oder auch der Steuereinheit zugeführt werden kann. Das Signal kann ein analoges oder auch ein digitales Signal sein. Neben einer Anzeige und/oder einer Meldung kann das Signal auch für weitere Zwecke, beispielsweise der Steuerung und/oder der Regelung verwendet werden.

Gemäß einer Weiterbildung kann der Luftdruck und/oder der Schmiermitteldruck kontinuierlich und/oder zeitdiskret erfasst werden. So kann beispielsweise vorgesehen sein, dass bei einem intermittierenden Betrieb der Schmiermittelsprühvorrichtung der Luftdruck und/oder der Schmiermitteldruck lediglich während der aktiven Phasen erfasst wird. Zur Gewinnung weiterer Informationen kann jedoch auch eine kontinuierliche Erfassung vorgesehen sein.

Weitere Vorteile und Merkmale sind der folgenden Beschreibung eines Ausführungsbeispiels zu entnehmen. Im Wesentlichen gleichbleibende Bauteile sind mit den gleichen Bezugszeichen bezeichnet. Die Zeichnung ist eine Schemazeichnung und dient lediglich der Erläuterung des folgenden Ausführungsbeispiels.

### Es zeigen:

- Fig. 1: eine schematische Seitenansicht einer Schmiermittelsprühvorrichtung der Erfindung in einer teilweise geschnittenen Darstellung,
- Fig. 2: eine Kolbenanordnung der Schmiermittelsprühvorrichtung gemäß Fig. 1 und
- Fig. 3: eine schematische Draufsicht auf die Schmiermittelsprühvorrichtung der Erfindung gemäß Fig. 1 im Bereich der Anschlüsse.

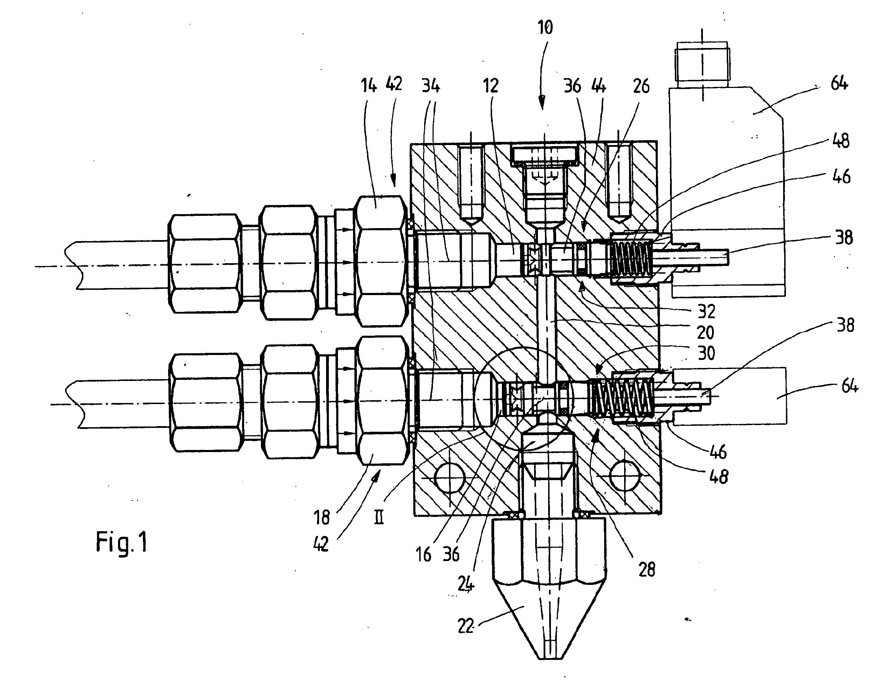

Fig. 1 zeigt eine Schmiermittelsprühvorrichtung 10 gemäß der Erfindung in einer aufgeschnittenen Seitenansicht. Zu erkennen ist aus Fig. 1, dass die Schmiermittelsprühvorrichtung 10 im Wesentlichen in einem Vorrichtungsblock 44 angeordnet ist, der vorliegend aus einem Stahl gebildet ist. In dem Vorrichtungsblock 44 ist ein Druckluftkanal 12, ein Schmiermittelkanal 16 sowie ein Verbindungskanal 20 und ein Auslasskanal 24 als Bohrung ausgebildet. Der Druckluftkanal 12 weist an einem Ende, in Fig. 1 linksseitig, einen Druckluftanschluss 14 auf. Ebenso weist der Schmiermittelkanal 16 an einem Ende, ebenfalls linksseitig in Fig. 1, einen Schmiermittelanschluss 18 auf. Der Verbindungskanal 20 verbindet den Druckluftkanal 12 fluidtechnisch mit dem Schmiermittelkanal 16. In Verlängerung über den Schmiermittelkanal 16 hinaus schließt sich an den Verbindungskanal 20 ein Auslasskanal 24 an, der in eine nicht bezeichnete Öffnung des Vorrichtungsblocks 44 mündet. Die Öffnung weist ein Innengewinde auf, in das eine Ausblasdüse 22 eingeschraubt ist.

Gegenüberliegend zu den Anschlüssen 14, 18 sind Druckerfassungsmittel 26, 28 angeordnet, die Kolbenanordnungen 30, 32 umfassen. Die Kolbenanordnungen 30, 32 sind im Druckluftkanal 12 und im Schmiermittelkanal 16 angeordnet. Jede Kolbenanordnung 30, 32 weist einen entlang einer Kanalachse 34 des Druckluftkanals 12 beziehungsweise des Schmiermittelkanals 16 bewegbaren vorgespannten Kolben 36 auf. Der Kolben 36 ist im Verbindungsbereich des Druckluftkanals 12 beziehungsweise des Schmiermittelkanals 16 mit dem Verbindungskanal 12 angeordnet.

Der Kolben 36 weist als Lagesensor des Druckerfassungsmittels 26, 28 eine Kolbenstange 38 auf, die aus dem Vorrichtungsblock 44 herausragt, und zwar unabhängig von der Stellung des Kolbens 36. Vorliegend ist die Kolbenstange 38 an dem den jeweiligen Anschluss des Kanals 12, 16 gegenüberliegenden Ende des Kolbens 36 angeordnet.

Gegenüberliegend zum Druckluftanschluss 14 beziehungsweise Schmiermittelanschluss 18 weist der Druckluftkanal 12 beziehungsweise der Schmiermittelkanal 16 einen Stopfen 46 auf, mit dem der jeweilige Kanal 12, 16 verschlossen ist. Der Stopfen 46 ist mittels eines nicht näher bezeichneten Gewindes mit dem Vorrichtungsblock 44 verbunden.

Der Stopfen 46 weist eine Längsbohrung auf, durch die die Kolbenstange 38 aus dem Vorrichtungsblock 44 nach außen ragend geführt ist. Innenseitig ist am Stopfen 46 eine Spiralfeder 48 wiedergelagert, die die Kolbenstange 38 umgibt und sich am stopfenseitigen Ende des Kolbens 36 abstützt. Hierdurch ist der Kolben 36 vorgespannt.

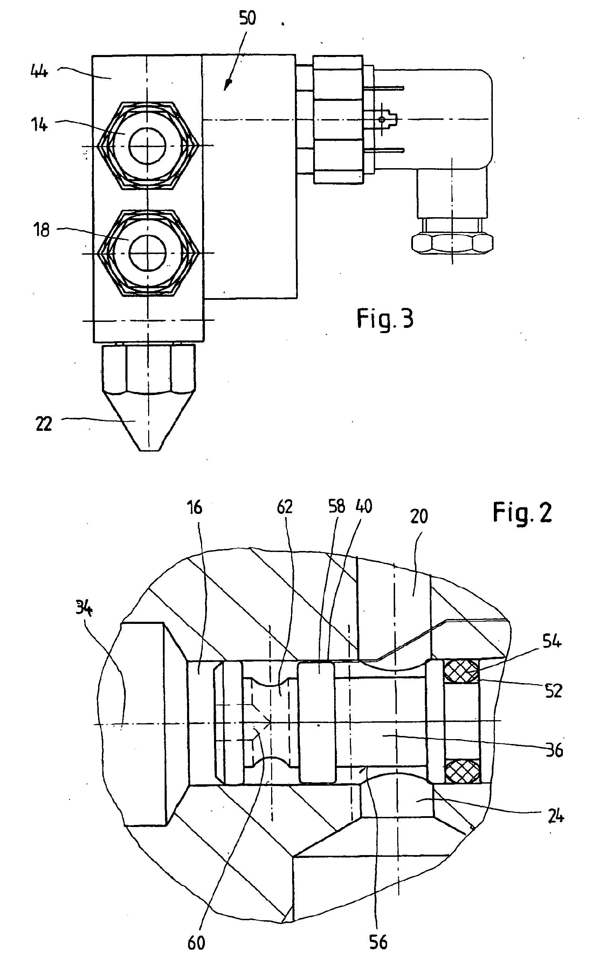

Fig. 3 zeigt die Vorrichtung gemäß Fig. 1 in einer Ansicht auf den Druckluftanschluss 14 sowie den Schmiermittelanschluss 18. Zu erkennen ist, dass an dem Vorrichtungsblock 44 seitlich eine Heizung 50 angeflanscht ist, mit der der Vorrichtungsblock 44 beheizt werden kann.

Aus Fig. 1 ist ferner ersichtlich, dass an dem Stopfen 46 Kolbenstangenpositionssensoren 64 angeflanscht sind, mit denen die Position der Kolbenstange 38 gegenüber dem mit dem Vorrichtungsblock 44 verbundenen Stopfen 46 erfasst werden kann.

Fig. 2 zeigt eine vergrößerte Darstellung des Bereichs II in Fig. 1. Zu erkennen ist, dass der Schmiermittel kanal 16 als Bohrung ausgebildet ist. Dem Schmiermittelkanal 16 ist der Kolben 36 entlang der Kanalachse 34 des Schmiermittelkanals 16 verschiebbar angeordnet. Der Kolben 36 ist in dieser Stellung in seiner maximal in Richtung Schmiermittelanschluss 18 verschobenen Stellung dargestellt. Stopfenseitig weist der Kolben 36 eine umlaufende Nut 52 auf, in der ein Dichtring 54 angeordnet ist. Bei Bewegung des Kolbens 36 läuft der Dichtring 54 an einer nicht bezeichneten Wand des Schmiermittelkanals 16 maximal bis kurz vor die Einmündung des Verbindungskanals 20 in den Schmiermittelkanal 16. In der in Fig. 2 dargestellten Position des Kolbens 36 weist der Kolben 36 einen Rücksprung 56 auf, der es erlaubt, dass in der in den Figuren dargestellten Stellung Druckluft vom Verbindungskanal 20 den Schmiermittelkanal 16 kreuzend in den Auslasskanal 24 gelangen kann, um diesen sowie die Ausblasdüse 22 von Fettrückständen zu befreien.

In Richtung Schmiermittelanschluss 18 weist der Kolben ferner einen radial nach außen vorstehenden Ringbereich 58 auf, der mit der Wand des Schmiermittelkanals 16 einen Ringspalt 40 als Bypass bildet. Daran schließt sich in Richtung Schmiermittelanschluss 18 ein weiterer nicht bezeichneter Rücksprung an, der von einer Durchgangsbohrung 62 senkrecht zu einer Kolbenlängsachse durchsetzt ist. In die Bohrung 62 mündet eine Bohrung 60, die stirnseitig vom Schmiermittelanschluss 18 aus gesehen im Kolben 36 angeordnet ist. Diese Ausgestaltung erlaubt es, dass der Kolben 36 unter Federkrafteinwirkung durch Verdrängung des Schmiermittels über die Bohrung 60, die Bohrung 62 sowie den Ringspalt 40 in seine maximal in Richtung Schmiermittelanschluss 18 verschobene Position verfahren werden kann, wenn der Druck im Schmiermittelkanal in einer Förderpause reduziert ist.

Vorliegend ist vorgesehen, dass die Kolben 36 im Druckluftkanal 12 sowie im Schmiermittelkanal 16 identisch ausgebildet sind. Natürlich kann für den Druckluftkanal 12 auch eine vereinfachte Version eines Kolbens 36 vorgesehen sein, die die Bohrungen und Vorsprünge nicht aufweist, da in diesem Fall die Kompressibilität von Luft genutzt würde.

In dieser Ausgestaltung ist vorgesehen, dass die Kolbenstange 38 koaxial zu einer Längsmittelachse des Kolbens 36 und zur Kanalachse 34 ausgerichtet ist. Natürlich kann die Kolbenstange auch am Kolben angelenkt sein.

Vorliegend wird die Schmiermittelsprühvorrichtung der Erfindung dazu benutzt, um Schmierstoff, insbesondere Fett mittels Luft zu sprühen. Die Vorrichtung wird eingesetzt zum Zwecke der Ritzelschmierung, der Gleitflächenschmierung, der Trennmittelauftragung und dergleichen.

Das in den Figuren dargestellte Ausführungsbeispiel dient lediglich der Erläuterung der Erfindung ist für diese nicht beschränkend.

### Bezugszeichenliste

- 10: Schmiermittelsprühvorrichtung
- 12: Druckluftkanal
- 14: Druckluftanschluss
- 16: Schmiermittelkanal
- 18: Schmiermittelanschluss
- 20: Verbindungskanal
- 22: Ausblasdüse
- 24: Auslasskanal
- 26: Druckerfassungsmittel
- 28: Druckerfassungsmittel
- 30: Kolbenanordnung
- 32: Kolbenanordnung
- 34: Kanalachse
- 36: Kolben
- 38: Kolbenstange
- 40: Bypass

- 42: Sperrventil
- 44: Vorrichtungsblock
- 46: Stopfen
- 48: Spiralfeder
- 50: Heizung
- 52: Nut
- 54: Dichtring
- 56: Rücksprung
- 58: Ringbereich
- 60: Bohrung
- 62: Bohrung
- 64: Kolbenstangenpositionssensor

## Patentansprüche

1. Schmiermittelsprühvorrichtung (10) mit:
einem Druckluftkanal (12) mit einem Druckluftanschluss (14),
einem Schmiermittelkanal (16) mit einem Schmiermittelanschluss (18),
einem Verbindungskanal (20), der den Druckluftkanal (12) fluidtechnisch mit dem Schmiermittelkanal (16) verbindet,
einem in eine Ausblasdüse (22) mündenden Auslasskanal (24),
der fluidtechnisch mit dem Verbindungskanal (20) verbunden ist,
einem mit dem Druckluftkanal (12) verbundenen Druckerfassungsmittel (26), und
einem mit dem Schmiermittelkanal (16) verbundenen Druckerfassungsmittel (28),
**dadurch gekennzeichnet, dass**
das Druckerfassungsmittel (26, 28) durch eine im Druckluftkanal (12) und/oder im Schmiermittelkanal (16) angeordnete Kolbenanordnung (30, 32) gebildet ist,
wobei die Kolbenanordnung (30, 32) einen entlang einer Kanalachse (34) bewegbaren vorgespannten Kolben (36) aufweist, wobei das Druckerfassungsmittel (26, 28) einen Lagesensor für den Kolben (36) aufweist, und wobei wenigstens der im Schmiermittelkanal (16) angeordnete Kolben (36) und/oder der Schmiermittelkanal (16) einen Bypass (40) aufweist.

2. Vorrichtung nach Anspruch 1, **dadurch gekennzeichnet, dass** der Lagesensor eine mit dem Kolben (36) verbundene Kolbenstange (38) aufweist.

3. Vorrichtung nach Anspruch 1 oder 2, **dadurch gekennzeichnet, dass** der Druckluftkanal (12) und der Schmiermittelkanal (16) zumindest im Bereich der Druckerfassungsmittel (26, 28) im Wesentlichen achsparallel ausgerichtet sind.

4. Vorrichtung nach einem der Ansprüche 1 bis 3, **gekennzeichnet durch** eine Steuereinheit.

5. Vorrichtung nach einem der Ansprüche 1 bis 4, **gekennzeichnet, durch** ein Heizelement (50).

6. Vorrichtung nach Anspruch 5, **dadurch gekennzeichnet, dass** das Heizelement (50) im Bereich des Schmiermittelkanals (16) angeordnet ist.

7. Vorrichtung nach Anspruch 5 oder 6, **dadurch gekennzeichnet, dass** das Heizelement (50) hinsichtlich seiner Leistung steuerbar ist.

8. Vorrichtung nach einem der Ansprüche 1 bis 7, **dadurch gekennzeichnet, dass** der Druckluftanschluss (14) und/oder der Schmiermittelanschluss (18) ein Sperrventil (42) aufweist.

9. Verfahren zum Betrieb einer Schmiermittelsprühvorrichtung (10) nach einem der vorhergehenden Ansprüche, wobei das Vorhandensein eines Luftdruckes in einem Druckluftkanal (12) und das Vorhandensein eines Schmiermitteldruckes in einem Schmiermittelkanal (16) jeweils mittels eines Druckerfassungsmittels (26, 28) unabhängig voneinander erfasst werden und ein entsprechendes Signal erzeugt wird, wobei die Schmiermittelsprühvorrichtung (10) mit:
einem Druckluftkanal (12) mit einem Druckluftanschluss (14),
einem Schmiermittelkanal (16) mit einem Schmiermittelanschluss (18),
einem Verbindungskanal (20), der den Druckluftkanal (12) fluidtechnisch mit dem Schmiermittelkanal (16) verbindet,
einem in eine Ausblasdüse (22) mündenden Auslasskanal (24), der fluidtechnisch mit dem Verbindungskanal (20) verbunden ist,
einem mit dem Druckluftkanal (12) verbundenen Druckerfassungsmittel (26), und
einem mit dem Schmiermittelkanal (16) verbundenen Druckerfassungsmittel (28) ausgebildet ist,
wobei das Druckerfassungsmittel (26, 28) durch eine im Druckluftkanal (12) und/oder im Schmiermittelkanal (16) angeordnete Kolbenanordnung (30, 32) gebildet ist,
wobei die Kolbenanordnung (30, 32) einen entlang einer Kanalachse (34) bewegbaren vorgespannten Kolben (36) aufweist, wobei das Druckerfassungsmittel (26, 28) einen Lagesensor für den Kolben (36) aufweist, und wobei wenigstens der im Schmiermittelkanal (16) angeordnete Kolben (36) und/oder der Schmiermittelkanal (16) einen Bypass (40) aufweist.

10. Verfahren nach Anspruch 9, **dadurch gekennzeichnet, dass** der Luftdruck und/oder der Schmiermitteldruck kontinuierlich und/oder zeitdiskret erfasst wird.

## Claims

1. A lubricant spraying device (10) comprising:
a compressed air channel (12) with a compressed air connection (14),
a lubricant channel (16) with a lubricant connection (18),
a connection channel (20) which connects the compressed air channel (12) in a fluidic manner to the lubricant channel (16),
an outlet channel (24) which ends in a blow-out nozzle (22) and which is connected in a fluidic manner to the connection channel (20),
a pressure detection means (26) connected to the compressed air channel (12), and
a pressure detection means (28) connected to the lubricant channel (16),
**characterized in that**
the pressure detection means (26, 28) is formed by a piston arrangement (30, 32) that is placed in the compressed air channel (12) and/or the lubricant channel (16),
wherein the piston arrangement (30, 32) comprises a piston (36) that is prestressed and movable along a channel axis (34), wherein the pressure detection means (26, 28) comprises a position sensor for the piston (36), and wherein at least the piston (36) placed in the lubricant channel (16) and/or the lubricant channel (16) comprises a bypass (40).

2. A device according to claim 1, **characterized in that** the position sensor comprises a piston rod (38) which is connected to the piston (36).

3. A device according to claim 1 or 2, **characterized in that** the compressed air channel (12) and the lubricant channel (16) have their axes essentially aligned in parallel at least in the area of the pressure detection means (26, 28).

4. A device according to one of the claims 1 through 3, **characterized by** a control unit.

5. A device according to one of the claims 1 through 4, **characterized by** a heating element (50).

6. A device according to claim 5, **characterized in that** the heating element (50) is placed in the area of the lubricant channel (16).

7. A device according to claim 5 or 6, **characterized in that** the heating element (50) can be controlled with respect to the power thereof.

8. A device according to one of the claims 1 through 7, **characterized in that** the compressed air connection (14) and/or the lubricant connection (18) comprises a stop valve (42).

9. A method for operating a lubricant spraying device (10) according to one of the preceding claims, wherein the presence of an air pressure in a compressed air channel (12) and the presence of a lubricant pressure in a lubricant channel (16) are respectively detected by means of a pressure detection means (26, 28) independently from each other and a corresponding signal is generated, wherein the lubricant spraying device (10) is designed with:
a compressed air channel (12) with a compressed air connection (14),
a lubricant channel (16) with a lubricant connection (18),
a connection channel (20) which connects the compressed air channel (12) in a fluidic manner to the lubricant channel (16),
an outlet channel (24) which ends in a blow-out nozzle (22) and which is connected in a fluidic manner to the connection channel (20),
a pressure detection means (26) connected to the compressed air channel (12), and
a pressure detection means (28) connected to the lubricant channel (16),
wherein the pressure detection means (26, 28) is formed by a piston arrangement (30, 32) that is placed in the compressed air channel (12) and/or the lubricant channel (16),
wherein the piston arrangement (30, 32) comprises a piston (36) that is prestressed and movable along a channel axis (34), wherein the pressure detection means (26, 28) comprises a position sensor for the piston (36), and wherein at least the piston (36) placed in the lubricant channel (16) and/or the lubricant channel (16) comprises a bypass (40).

10. A method according to claim 9, **characterized in that** the air pressure and/or the lubricant pressure is detected continuously and/or in a discrete-time manner.

## Revendications

1. Dispositif de pulvérisation de lubrifiant (10), comprenant:
un canal d'air comprimé (12) avec un raccord d'air comprimé (14),
un canal de lubrifiant (16) avec un raccord de lubrifiant (18),
un canal de liaison (20) qui relie le canal d'air comprimé (12) au canal de lubrifiant (16) de manière fluidique,
un canal de sortie (24) qui débouche dans une tuyère d'échappement (22) et qui est relié de manière fluidique au canal de liaison (20),
un moyen de détection de pression (26) relié au canal d'air comprimé (12), et
un moyen de détection de pression (28) relié au canal de lubrifiant (16),
**caractérisé en ce que**
le moyen de détection de pression (26, 28) est formé par un ensemble de piston (30, 32) disposé dans le canal d'air comprimé (12) et/ou dans le canal de lubrifiant (16),
l'ensemble de piston (30, 32) comprenant un piston (36) précontraint et déplaçable le long d'un axe de piston (34), le moyen de détection de pression (26, 28) comprenant un détecteur de position pour le piston (36) et au moins le piston disposé dans le canal de lubrifiant (16) et/ou le canal de lubrifiant (16) comprenant un bypass (40).

2. Dispositif selon la revendication 1, **caractérisé en ce que** le détecteur de position comprend une tige de piston (38) reliée au piston (36).

3. Dispositif selon la revendication 1 ou la revendication 2, **caractérisé en ce que** le canal d'air comprimé (12) et le canal de lubrifiant (16) ont leurs axes essentiellement alignés en parallèle, au moins au niveau des moyens de détection de pression (26, 28).

4. Dispositif selon l'une des revendications 1 à 3, **caractérisé par** une unité de commande.

5. Dispositif selon l'une des revendications 1 à 4, **caractérisé par** un élément de chauffage (50).

6. Dispositif selon la revendication 5, **caractérisé en ce que** l'élément de chauffage (50) est disposé au niveau du canal de lubrifiant (16).

7. Dispositif selon la revendication 5 ou la revendication 6, **caractérisé en ce que** l'élément de chauffage (50) peut être commandé par rapport à son effet utile.

8. Dispositif selon l'une des revendications 1 à 7, **caractérisé en ce que** le raccord d'air comprimé (14) et/ou le raccord de lubrifiant (18) comprend un clapet anti-retour (42).

9. Procédé d'actionnement d'un dispositif de pulvérisation de lubrifiant (10) selon l'une des revendications précédentes, dans lequel la présence d'une pression d'air dans un canal d'air comprimé (12) et la présence d'une pression de lubrifiant dans un canal de lubrifiant (16) sont chacune détectées à l'aide d'un moyen de détection de pression (26, 28) indépendamment l'une de l'autre et un signal correspondant est généré, le dispositif de pulvérisation de lubrifiant (10) étant formé avec :
un canal d'air comprimé (12) avec un raccord d'air comprimé (14),
un canal de lubrifiant (16) avec un raccord de lubrifiant (18),
un canal de liaison (20) qui relie le canal d'air comprimé (12) au canal de lubrifiant (16) de manière fluidique,
un canal de sortie (24) qui débouche dans une tuyère d'échappement (22) et qui est relié de manière fluidique au canal de liaison (20),
un moyen de détection de pression (26) relié au canal d'air comprimé (12), et
un moyen de détection de pression (28) relié au canal de lubrifiant (16),
le moyen de détection de pression (26, 28) étant formé par un ensemble de piston (30, 32) disposé dans le canal d'air comprimé (12) et/ou dans le canal de lubrifiant (16),
l'ensemble de piston (30, 32) comprenant un piston (36) précontraint et déplaçable le long d'un axe de piston (34), le moyen de détection de pression (26, 28) comprenant un détecteur de position pour le piston (36) et au moins le piston disposé dans le canal de lubrifiant (16) et/ou le canal de lubrifiant (16) comprenant un bypass (40).

10. Procédé selon la revendication 9, **caractérisé en ce que** la pression d'air et/ou la pression de lubrifiant est détecté de manière continue et/ou à valeurs discrètes en temps.
